# EUROPEAN PATENT SPECIFICATION

(11) **EP 4 585 349 B1**
(45) Date of publication and mention of the grant of the patent: **04.11.2026**
(21) Application number: 23900473.2
(22) Date of filing: 24.11.2023
(51) Int. Cl.: B23K 11/16, B23K 11/11

(54) **METHOD FOR RESISTANCE SPOT WELDING**
WIDERSTANDSPUNKTSCHWEISSVERFAHREN
PROCÉDÉ DE SOUDAGE PAR POINTS PAR RÉSISTANCE

(30) Priority: 06.12.2022 JP 2022194717
(43) Date of publication of application: 16.07.2025
(73) Proprietor: JFE Steel Corporation, Tokyo 100-0011 (JP)
(72) Inventor: KAWABE, Nao, Tokyo 100-0011 (JP); SAWANISHI, Chikaumi, Tokyo 100-0011 (JP); TAKASHIMA, Katsutoshi, Tokyo 100-0011 (JP)
(74) Representative: Haseltine Lake Kempner LLP
(86) International application number: PCT/JP2023/042113
(87) International publication number: WO 2024/122355

(56) References cited:
- EP-A1- 2 474 381
- EP-A1- 3 147 065
- WO-A1-2011/025015
- JP-A- 2003 103 377
- JP-A- 2017 047 476
- JP-A- 2019 072 764
- JP-A- 2019 171 450

## Description

### Technical Field

The present invention relates to a method for resistance spot welding.

### Background Art

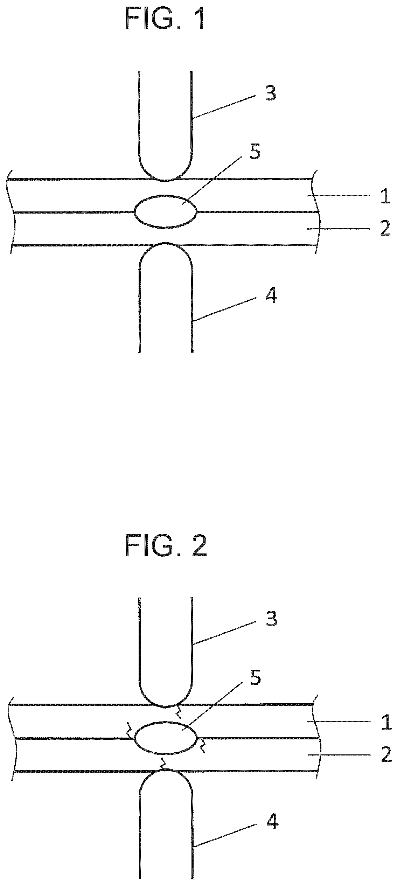

In general, for joining two or more overlapping steel sheets, a method for resistance spot welding being a type of a method for lap resistance welding is used. In this method for welding, as illustrated in Fig. 1, a sheet set is formed with two overlapping steel sheets 1 and 2, the sheet set is clamped by a pair of welding electrodes 3 and 4 on the upper and lower sides, and the sheet set is pressurized by the pair of welding electrodes 3 and 4 from the upper and lower sides while a welding current is caused to flow across the upper and lower electrodes. Thus, the steel sheets are joined to each other. A dot-shaped weld 5 is obtained by using resistance heating generated when the welding current is flowed. This dot-shaped weld 5 is referred to as a nugget and formed as follows: when a welding current is caused to flow through the overlapping steel sheets, the steel sheets 1 and 2 are molten at a portion where the steel sheets are in contact with each other, and the molten portion is solidified to form the nugget. Thus, the steel sheets are joined to each other in a dot shape. Fig. 1 illustrates two overlapping steel sheets as an example.

However, in the resistance spot welding performed on the sheet set formed by causing a plurality of steel sheets including a surface treated steel sheet to overlap each other, a problem may arise in that cracking occurs in the weld. Here, the surface treated steel sheet refers to a steel sheet having a metal coated layer on a surface of a base material (also referred to as a base steel sheet). The metal coated layer is formed by galvanizing, for example, represented by electrogalvanizing or hot-dip galvanizing (the hot-dip galvanizing includes galvannealing) or zinc alloy coating including an element such as aluminum or magnesium in addition to zinc. The melting points of galvanizing and zinc alloy coating are lower than that of the base material, and accordingly, galvanizing and zinc alloy coating have a problem of cracking in the weld as follows.

The cracking in the weld is conceivably cracking ascribable to so-called liquid metal embrittlement (LME cracking) occurring as follows: When a metal coated layer of a low melting point of a steel sheet surface melts during welding and a pressurizing force by the electrodes and tensile stress due to thermal expansion and contraction of the steel sheets is exerted on the weld, the molten metal of low melting point enters a crystal grain boundary of the base material of the surface treated steel sheet. This reduces grain boundary strength and causes cracking.

The cracking as described above occurs at various positions such as, as illustrated in Fig. 2, the surfaces of the steel sheets 1 and 2 on the side in contact with the welding electrodes 3 and 4 and the surfaces of the steel sheets 1 and 2 on the side in contact with another steel sheet.

Examples of the countermeasures against such a problem include, for example, a technique described in Patent Literature 1. Patent Literature 1 proposes a method for suppressing the occurrences of cracking. In this method, welding energization time and holding time after the welding energization are adjusted to time more than predetermined time in spot welding for a high-strength coated steel sheet. However, there is the following problem with the technique described in Patent Literature 1: When the technique is applied to a high-strength steel sheet with a tensile strength of higher than or equal to 980 MPa class, the toughness is reduced by rapid cooling of the weld due to long holding time, and the cross tension strength (CTS) of a joint is reduced.

Examples of the countermeasures against such a problem of reduction of the CTS include, for example, a technique described in Patent Literature 2. Patent Literature 2 proposes a method that suppresses cracking during the welding while ensuring the CTS by providing pre-energization or post-energization in addition to main energization, the main energization being provided for the purpose of welding, and defining upper and lower limits of holding time in an appropriate range of the holding time.

### Citation List

### Patent Literature

PTL 1: Japanese Unexamined Patent Application Publication No. 2003-103377
PTL 2: Japanese Unexamined Patent Application Publication No. 2017-47476

### Summary of Invention

### Technical Problem

However, according to the technique described in Patent Literature 2, the appropriate range of the holding time is narrow for a joint having a small total thickness. Thus, in actual operation, it may be difficult to control the welding conditions within the appropriate range.

The present invention is made in view of the above-described situations, and the purpose of the present invention is to provide a method for resistance spot welding that can, in a surface treated steel sheet, stably suppress cracking during welding and ensure CTS of a joint.

### Solution to Problem

The inventors have earnestly studied for achieving the above-described purpose.

The LME cracking can be suppressed by adjusting the holding time after the welding energization to a time more than or equal to a predetermined time. However, an increase in the holding time leads to reduction of the CTS. Thus, from the viewpoint of ensuring the CTS, the holding time is preferably a short time. From these two problems, there is a problem in that it is difficult to control an appropriate holding time in actual operation.

The inventors have found that, when a cooling step with a cooling time more than or equal to a predetermined time is provided after a main energizing step, which is provided for the purpose of formation of a nugget, (i) providing a post-energizing step after the cooling step can facilitate solidification of molten zinc and recover the toughness of the weld, and (ii) a larger appropriate range of the holding time can be ensured in a holding step after the post-energizing step. Thus, the LME cracking can be stably suppressed and the CTS can be ensured also in actual operation.

In this process, the functions of the cooling time are as follows.
-- Viewpoint of suppression of LME cracking: The cooling time facilitates solidification of the hot dipping and prevents zinc from remelting in the following post-energizing step.
-- Viewpoint of ensuring CTS: The cooling time reduces the temperature of the weld and improves an effect of recovering toughness by tempering in the following post-energizing step.

As described above, in order to stably suppress the LME cracking and ensure the CTS, control of the cooling step is particularly important. Specifically, it is important to set the cooling time to be more than or equal to the predetermined time in the cooling step and adjust the holding time in the holding step in accordance with the set cooling time. The inventors have also found that, when the cooling time is set to be long, a wide appropriate range of the holding time can be ensured.

The present invention is made based on the above-described findings, and the present invention relates to a method as defined in claim 1. In particular, the invention provides a method for resistance spot welding in which two or more steel sheets including at least one surface treated steel sheet having a metal coated layer are caused to overlap each other to form a sheet set, and the sheet set is clamped and pressurized by a pair of welding electrodes while being energized so as to be joined to each other.

The method includes the steps of main energizing performed for forming a nugget, cooling, post-energizing, and holding. The cooling, the post-energizing, and the holding are performed after the main energizing.

Cooling time Ct (ms) in the cooling is more than or equal to 140 ms, and
holding time Ht (ms) in the holding satisfies expression (1) or expression (2) below: 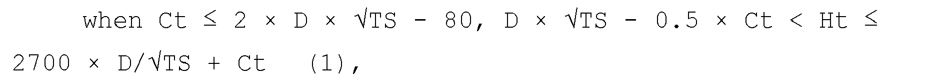 when Ct ≤ 2 × D × √TS - 80, D × √TS - 0.5 × Ct < Ht ≤ 2700 × D/√TS + Ct (1), $when Ct > 2 \times D \times √ TS - 80 , 40 < Ht \leq 2700 \times D / √ TS + Ct$ (2).

In expression (1) and expression (2), D is a total thickness (mm) of the sheet set, and TS is a tensile strength (MPa) of a steel sheet having a highest tensile strength in the sheet set.

According to an embodiment of the invention, in the post-energizing step, a current value Ip (kA) and an energization time Pt (ms) satisfy expression (3) and expression (4) below: $0.5 \times Im \leq Ip \leq 1.1 \times Im$ (3), $150 \times Im / Ip \leq Pt \leq 700 \times Im / Ip$ (4),

In expression (3) and expression (4), Im represents a current value (kA) in the main energizing step.

According to an embodiment of the invention, one or two or more of states (a) to (e) below are satisfied immediately before pressurization with the welding electrodes is performed.
(a) A state in which the steel sheets overlapping each other and the welding electrodes form a contact angle of larger than or equal to 0.2 degrees.
(b) A state in which the pair of welding electrodes are misaligned from each other by larger than or equal to 0.1 mm.
(c) A state in which a gap of larger than or equal to 0.5 mm is formed between one of the welding electrodes and the steel sheets overlapping each other.
(d) A state in which a gap of larger than or equal to 0.5 mm is formed between at least a pair of steel sheets out of the steel sheets overlapping each other.
(e) A state in which a shortest distance between a center of a weld point and steel-sheet end surfaces of the steel sheets overlapping each other is smaller than or equal to 10 mm.

According to an embodiment of the invention, at least one of the steel sheets overlapping each other has a tensile strength of higher than or equal to 980 MPa.

### Advantageous Effects of Invention

According to the present invention, the occurrences of cracking in the surface treated steel sheet during welding can be stably suppressed and the CTS can be ensured. Thus, significant effects are produced for industry.

### Brief Description of Drawings

[Fig. 1] Fig. 1 is a sectional view schematically illustrating an example of resistance spot welding according to the present invention.
[Fig. 2] Fig. 2 is a sectional view schematically illustrating cracking occurring in a resistance spot weld.
[Fig. 3] Fig. 3 schematically illustrates a state according to the present invention in which overlapping steel sheets and welding electrodes form a contact angle.
[Fig. 4] Fig. 4 schematically illustrates a state according to the present invention in which a pair of welding electrodes are misaligned form each other.
[Fig. 5] Fig. 5 schematically illustrates a state according to the present invention in which a gap is formed between the welding electrodes and the overlapping steel sheets.
[Fig. 6] Fig. 6 schematically illustrates a state according to the present invention in which a gap is formed between the overlapping steel sheets.
[Fig. 7] Fig. 7 illustrates the distance between the center of a weld point and steel-sheet end surfaces according to the present invention.

### Description of Embodiments

Hereinafter, a method for resistance spot welding according to the present invention is described with reference to the drawings. It should be understood that the present invention is not limited to this embodiment, but is defined by the claims.

The present invention is a method for resistance spot welding in which two or more steel sheets are caused to overlap each other to form a sheet set, the sheet set is clamped and pressurized by a pair of welding electrodes while being energized under the welding conditions, which will be described later, and thereby a nugget is formed and the steel sheets are welded to each other. The above-described sheet set includes at least one surface treated steel sheet having a metal coated layer. The number of the steel sheets overlapping each other is preferably smaller than or equal to four.

The present invention is applied to the method for resistance spot welding for a sheet set in which at least one of a plurality of steel sheets included in the sheet set is a surface treated steel sheet having a metal coated layer. Preferably, a melting point of the metal coated layer is lower than a melting point of a base material of the surface treated steel sheet.

Preferably, at least one of the plurality of steel sheets included in the sheet set is a high-strength steel sheet with a tensile strength of higher than or equal to 980 MPa. The high-strength steel sheet exhibits a high sensitivity to cracking, and a problem in that cracking occurs during welding is likely to arise. Thus, the effect of the present invention can be more likely to be produced. The tensile strength is more preferably higher than or equal to 1180 MPa. Although the upper limit of the tensile strength of the steel sheet is not particularly specified, the tensile strength is preferably lower than or equal to 2500 MPa.

According to the present invention, the thickness of the steel sheet to be subjected to the resistance spot welding is not particularly limited. For example, preferably, the thickness of the steel sheet is within a range larger than or equal to 0.5 mm and smaller than or equal to 3.0 mm. The steel sheet having a thickness within this range can be preferably used as an automotive part.

For example, when a sheet set of two steel sheets overlapping each other is subjected to the resistance spot welding as illustrated in Fig. 1, a pair of welding electrodes, that is, an electrode 4 disposed below the sheet set (hereinafter referred to as a lower electrode) and an electrode 3 disposed above the sheet set (hereinafter referred to as an upper electrode) clamp the overlapping steel sheets (an upper steel sheet 1 and a lower steel sheet 2), pressurize the overlapping steel sheets, and energize the overlapping steel sheets.

According to the present invention, it is sufficient that the device performing the method for resistance spot welding be configured to pressurize with the lower and upper electrodes and control the pressurizing force. The configuration for this is not particularly limited. For example, a device such as an air cylinder or a servomotor may be used. A configuration used to supply a current during the energization and control this current value is not particularly limited, either. The present invention is applicable to both the direct current or the alternating current. In the case of the alternating current, the "current" means an "effective current".

The type of a tip of the lower electrode or the upper electrode is not particularly limited, either. Examples of the type of the tip include, for example, a dome radius type (DR type), a radius type (R type), a dome type (D type), and the like described in JISC 9304:1999. The diameter of the tip of the electrodes is, for example, 4 to 16 mm. The radius of curvature is, for example, 10 to 400 mm, and the electrode may be of a flat type having a flat tip.

As described above, when the overlapping steel sheets (sheet set) are subjected to the pressure and energized while being clamped by using the pair of welding electrodes, a nugget of a necessary size is formed and the overlapping steel sheets are joined together by resistance heating. Thus, a welding joint is obtained. According to the present invention, the energization is performed in a specific pattern, which will be described later.

The types and the shapes of two or more steel sheets subjected to the resistance spot welding may be the same or different. Furthermore, a surface treated steel sheet having a metal coated layer and a steel sheet without a metal coated layer may overlap each other.

Next, an energization pattern in the method for resistance spot welding according to the present invention is described.

The energization pattern according to the present invention includes a cooling step, a post-energizing step, and a holding step after a main energizing step. These steps are controlled so as to satisfy the welding conditions to be described below.

### <Main Energizing Step>

The main energizing step is aimed at forming of a nugget (molten portion). Energization conditions or pressurizing conditions for the forming of the nugget are not particularly limited. It is sufficient that conditions under which a nugget diameter of a necessary size can be ensured be appropriately selected. The nugget diameter of a necessary size differs depending on the types of steel. For example, the current in the main energizing step is preferably higher than or equal to 1.0 kA and lower than or equal to 15 kA, and a pressurizing force is preferably higher than or equal to 2.0 kN and lower than or equal to 7.0 kN. Furthermore, energization time in the main energizing step is more than or equal to 100 ms and less than or equal to 1000 ms.

### <Cooling Step>

After the main energizing step, the cooling step is performed. As described above, according to the present invention, in order to stably suppress the liquid metal embrittlement (LME) cracking and ensure the cross tension strength (CTS), the control of the cooling step is particularly important.

According to the present invention, a cooling time Ct (ms) in the cooling step is more than or equal to 140 ms.

When the cooling time is less than 140 ms, cooling is insufficient, resulting in failing to sufficiently obtain an effect of solidifying hot dipping. That is, the effect from the viewpoint of the above-described suppressing of the LME cracking (specifically, preventing zinc from remelting in the following post-energizing step) is unable to be obtained. As a result of insufficient cooling, an effect of improving recovery of toughness by tempering in the following post-energizing step (that is, the effect from the above-described viewpoint of ensuring the CTS) is unable to be sufficiently obtained.

Although an upper limit of the cooling time is not particularly limited, the cooling time is preferably less than or equal to 2000 ms. When the cooling time is more than 2000 ms, the total time of the entire welding steps increases, and accordingly, productivity degrades. The cooling time is more preferably less than or equal to 1000 ms, and still more preferably, less than or equal to 800 ms.

Furthermore, in order to more markedly produce an effect of facilitating the effect of the solidification of the hot dipping and the effect of improving the recovery of the toughness by the tempering in the following post-energizing step, the cooling time is preferably more than or equal to 240 ms.

### <Post-Energizing Step>

After the cooling step, the post-energizing step is performed. As described above, according to the present invention, the effects of the present invention can be obtained when the cooling step and the holding step, which will be described later, are adjusted to the appropriate conditions. In order to more markedly produce the effects from the viewpoints of suppressing of the LME cracking and ensuring the CTS, it is effective to adjust the conditions of the post-energizing step, in addition to those of the cooling step and the holding step, as follows.

In the post-energizing step after the cooling step, a current value Ip (kA) and an energization time Pt (ms) in the post-energizing step preferably satisfy expressions (3) and (4) below. $0.5 \times Im \leq Ip \leq 1.1 \times Im$ (3), $150 \times Im / Ip \leq Pt \leq 700 \times Im / Ip$ (4).

Here, Im in expression (3) and expression (4) represents the current value (kA) in the main energizing step.

When Ip < 0.5 × Im or Pt < 150 × Im/Ip, heat input is insufficient, and the effect of recovery of the toughness by the tempering is not necessarily obtained. As a result, the CTS may degrade.

When Ip > 1.1 × Im or Pt > 700 × Im/Ip, heat input is excessively large. Thus, a temperature range appropriate for obtaining a tempering effect is exceeded, and the effect of recovery of the toughness is not necessarily obtained. As a result, the CTS may degrade. Furthermore, the coated layer may melt due to the increase in temperature, and accordingly, the effect of suppressing the LME cracking is not necessarily obtained.

### <Holding Step>

After the post-energizing step, the holding step in which only the pressurizing force is held without energization is performed. As described above, according to the present invention, it is important to set the cooling time to be more than or equal to a predetermined time in the cooling step and adjust a holding time in the holding step in accordance with the set cooling time, which will be described later.

In the holding step after the post-energizing step, a holding time Ht (ms) in the holding step is set so as to satisfy expression (1) or expression (2) below: 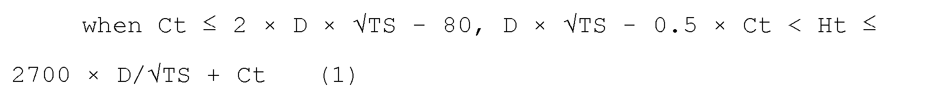 when Ct ≤ 2 × D × √TS - 80, D × √TS - 0.5 × Ct < Ht ≤ 2700 × D/√TS + Ct (1) $when Ct > 2 \times D \times √ TS - 80 , 40 < Ht \leq 2700 \times D / √ TS + Ct$ (2).

Here, in expression (1) and expression (2), D is the total thickness (mm) of the sheet set, TS is the tensile strength (MPa) of a steel sheet having the highest tensile strength in the sheet set, and Ct is the cooling time (ms) in the cooling step.

That is, in the relationships among the cooling time (Ct) in the cooling step and the total thickness (D) and the tensile strength (TS) in the sheet set, when Ct ≤ 2 × D × √TS - 80, the holding time (Ht) is set so as to satisfy expression (1). In contrast, when Ct > 2 × D × √TS - 80, the holding time (Ht) is set so as to satisfy expression (2).

In the case where Ht ≤ D × √TS - 0.5 × Ct when Ct ≤ 2 × D × √TS - 80 and in the case where Ht ≤ 40 when Ct > 2D × √TS - 80, tensile stress is exerted while the coated layer is not sufficiently solidified in a welding electrode open time after the completion of the holding step. Thus, the LME cracking is likely to occur.

In the case where Ht > 2700 × D/√TS + Ct when Ct ≤ 2 × D ×√TS-80 and in the case where Ht > 2700 × D/√TS + Ct when Ct > 2 × D × √TS-80, the weld is rapidly cooled due to excessively long holding time. As a result, the CTS may degrade due to degradation of the toughness.

When welding is performed in the above-described energization pattern, the occurrences of cracking in the surface treated steel sheet during welding can be stably suppressed while the CTS of the obtained welding joint can be ensured.

The pressurizing force is assumed to be uniform through all the steps.

### <Welding Work Disturbance>

The LME cracking is likely to occur when work disturbance exists during welding. Thus, according to the present invention, in addition to the adjustment to the above-described energization pattern, one or two or more of the following states (a) to (e) are preferably satisfied for at least one of weld points immediately before pressurization with the welding electrodes is performed. This allows the effects of the present invention to be more effectively obtained.
(a) A state in which the overlapping steel sheets and the welding electrodes form a contact angle of larger than or equal to 0.2 degrees.
(b) A state in which the pair of welding electrodes are misaligned from each other by larger than or equal to 0.1 mm.
(c) A state in which a gap of larger than or equal to 0.5 mm is formed between one of the welding electrodes and the overlapping steel sheets.
(d) A state in which a gap of larger than or equal to 0.5 mm is formed between at least a pair of steel sheets out of the overlapping steel sheets.
(e) A state in which the shortest distance between the center of the weld point and steel-sheet end surfaces of the overlapping steel sheets is smaller than or equal to 10 mm.

Any of these welding work disturbances locally increases the temperature and/or tensile stress of the weld when the electrodes are released. Thus, the LME cracking is likely to occur. However, setting of appropriate cooling time and appropriate holding time in accordance with the present invention allows suppression of the LME cracking even when these welding work disturbances exist. Accordingly, a tolerance of controlling the work disturbance is improved during the manufacture of members.

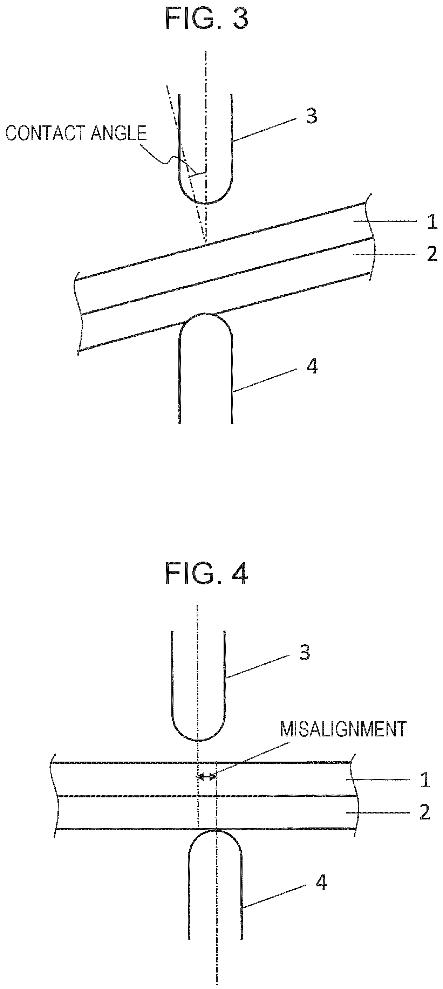

Hereinafter, the details of the work disturbances are described with reference to Figs. 3 to 7. Figs. 3 to 7 illustrate side views of the welding electrodes and the sheet set. Referring to Figs. 3 to 7, the upper electrode 3 represents a movable electrode, and the lower electrode 4 represents a fixed electrode.
(a) The state in which the overlapping steel sheets and the welding electrodes form a contact angle of larger than or equal to 0.2 degrees.

The contact angle means an angle at which the welding electrodes 3 and 4 are inclined relative to the steel sheets 1 and 2 as illustrated in Fig. 3, that is, an "angle formed between an electrode pressurizing force direction and a steel-sheet thickness direction". When the contact angle is large, bending stress is exerted on the weld, and a large compressional plastic deformation occurs locally. Thus, the tensile stress increases after the cooling step. When the contact angle is larger than or equal to 0.2 degrees, the effects of the present invention can be effectively obtained. An excessively large contact angle destabilizes formation of the nugget and causes splashes. Thus, the contact angle is preferably set to smaller than or equal to 10 degrees.

(b) The state in which the pair of welding electrodes are misaligned from each other by lager than or equal to 0.1 mm.

The misalignment means, as illustrated in Fig. 4, a state in which the axes of a pair of welding electrodes 3 and 4 are not aligned with each other. As is the case with the above-described contact angle, when the misalignment is large, bending stress is exerted on the weld. This increases the likelihood of the occurrences of the LME cracking. When the amount of misalignment is larger than or equal to 0.1 mm, the effects of the present invention can be effectively obtained. An excessively large amount of misalignment destabilizes formation of the nugget and causes splashes. Thus, the amount of misalignment is preferably set to smaller than or equal to 5 mm.

(c) The state in which a gap of larger than or equal to 0.5 mm is formed between one of the welding electrodes and the overlapping steel sheets.

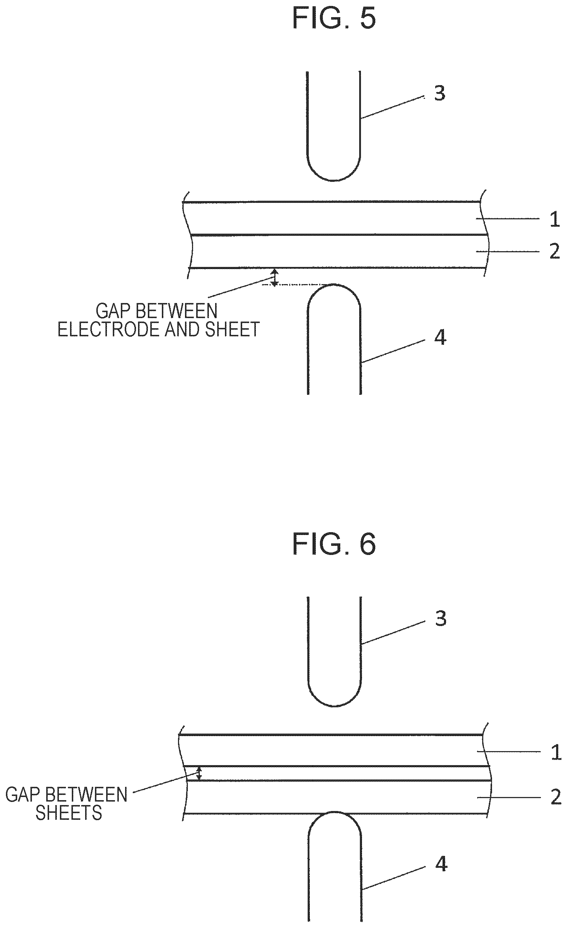

In the state in which a gap is formed between one of the welding electrodes and the steel sheets immediately before the start of pressurization, for example, in a state in which, when one of the electrodes is movable (hereinafter, a movable electrode) and the other electrode is fixed (hereinafter, a fixed electrode), a gap is formed between the fixed electrode 4 and the steel sheets 2 as illustrated in Fig. 5, bending deformation occurs in the steel sheets at the start of pressurization by the movable electrode 3. Thus, when the bending stress is exerted on the weld, the likelihood of the occurrences of the LME cracking increases. When the size of the gap (that is, the gap between the electrode and the sheet) is larger than or equal to 0.5 mm, the effects of the present invention can be effectively obtained. An excessively large size of the gap destabilizes formation of the nugget and causes splashes. Thus, the size of the gap is preferably set to smaller than or equal to 5 mm.

(d) The state in which a gap of larger than or equal to 0.5 mm is formed between at least a pair of steel sheets out of the overlapping steel sheets.

As is the case with (c) described above, in a state in which a gap is formed between any of the steel sheets as illustrated in Fig. 6 (in the example illustrated in Fig. 6, between the upper steel sheet 1 and the lower steel sheet 2) immediately before the start of the pressurization, bending deformation occurs in the steel sheets. Thus, the bending stress is exerted on the weld. This increases the likelihood of the occurrences of the LME cracking. When the size of the gap (that is, the gap between the sheets) is larger than or equal to 0.5 mm, the effects of the present invention can be effectively obtained. An excessively large size of the gap destabilizes formation of the nugget and causes splashes. Thus, the size of the gap is preferably set to smaller than or equal to 4 mm.

(e) The state in which the shortest distance between the center of the weld point and steel-sheet end surfaces of the overlapping steel sheets is smaller than or equal to 10 mm.

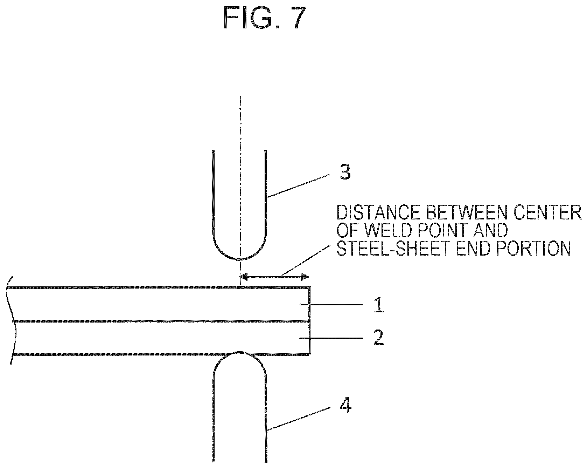

When the shortest distance between the center of the weld point and the steel-sheet end surfaces (that is, steel-sheet end portions) illustrated in Fig. 7 is small, the cooling rate of the weld may be excessively reduced due to inhibition of thermal conduction from the weld at the steel-sheet end surfaces. Accordingly, the temperature increases when the electrodes are released. Thus, the LME cracking is likely to occur. When shortest distance between the center of the weld point and the steel-sheet end surfaces is smaller than or equal to 10 mm, the effects of the present invention can be effectively obtained. When this distance is smaller than 3 mm, splashes significantly occur during the welding and the diameter of the nugget is likely to vary. Thus, the strength of the weld destabilizes. Accordingly, this distance is preferably larger than or equal to 3 mm.

Although the case where the two steel sheets overlap each other so as to undergo the resistance spot welding has been mainly described above, the present invention can be similarly applied to a case where three or more steel sheets overlap each other so as to undergo the welding. Also in this case, the above-described effects can be similarly obtained.

### EXAMPLES

Hereinafter, the operations and the effects of the present invention are described by using examples. It should be understood that the present invention is not limited to the following examples, but is defined by the claims.

In the examples, as the surface treated steel sheets, two steel sheets including a galvanized steel sheet were used, and these steel sheets overlapped each other to form the sheet set (see Table 1). Here, as the upper steel sheet and the lower steel sheet, a galvannealed (GA) steel sheet and a cold rolled steel sheet were used. The tensile strength and the thickness of these steel sheets are the conditions listed in Table 1.

The resistance spot welding was performed on the sheet set under the conditions listed in Tables 2-1 and 2-2 to fabricate a welding joint. In Table 2-1, the signs indicated in the "Work disturbance in LME evaluation" column correspond to (a) to (e) indicated for the welding work disturbances described above.

The resistance spot welding was performed at room temperature while the welding electrodes (the lower electrode and the upper electrode) were always water cooled. The diameter of the tips (that is, tip diameter) of both the lower and upper electrodes is 6 mm, and the radius of curvature of the tips is 40 mm. These electrodes are DR type electrodes formed of chromium copper. Furthermore, the upper electrode was driven by a servomotor to control the pressurizing force, and a direct-current power source was supplied for energization.

The presence/absence of the occurrence of the LME cracking and the CTS of the obtained welding joint were evaluated in accordance with the following criteria.

### [Evaluation of Cracking]

For evaluation of cracking (that is, the LME cracking), ten pieces of the welded member were fabricated and the LME cracking between the sheets was checked. Specifically, welding was performed in a state in which one or two or more of (a) to (e) of the above-described welding work disturbances were satisfied, and the obtained welding joints were cut at the center of the weld with a microcutter. Then, the section of the weld was observed. From the result of the observation, the presence/absence of the occurrence of the LME cracking was evaluated in accordance with the following criteria.

### <Criteria>

A: Free of cracking in all ten pieces.
B: Cracking occurred in two or less welding joints, and the maximum depth of cracking was smaller than 100 µm.
F: Cracking occurred in three or more welding joints, or the maximum depth of cracking was larger than or equal to 100 µm.

Here, an example was evaluated as satisfactory when the evaluation result was A or B.

### [Evaluation of CTS]

The CTS was evaluated based on a method for cross tension testing (JIS Z3137). Welding joints (cross tension joints) fabricated as follows were used for the cross tension testing: cross tension testing pieces were cut from each of the steel sheets listed in Table 1; and the resistance spot welding was performed on the sheet sets listed in Table 1 under the welding conditions listed in Tables 2-1 and 2-2. Three pieces of the cross tension joint were fabricated and CTSs of the three pieces were measured. An average value of the CTSs of the three pieces was obtained. The obtained average value and the CTS target value for each sheet set listed in Table 1 were compared and evaluated in accordance with the following criteria.

### <Criteria>

A: The average value of the CTS exceeded 120% of the CTS target value.
B: The average value of the CTS was in a range from 100% to 120% of the CTS target value.
F: The average value of the CTS was less than the CTS target value.

The CTS was evaluated without giving the welding work disturbance.

### [Determination]

Regarding the determination, when each of the evaluation result of the LME cracking and the evaluation result of the CTS was A or B, this case was evaluated as "OK (passed) **".** When one or both of these evaluation results were F, this case was evaluated as "NG (failed)". The evaluation result is listed in Table 2-2.

**[Table 1]**

| Sheet set No. | Steel sheet 1 | | | Steel sheet 2 | | | CTS target value (kN) |
|---|---|---|---|---|---|---|---|
| | Tensile strength (MPa) | Thickness (mm) | Coating | Tensile strength (MPa) | Thickness (mm) | Coating | |
| a | 1470 | 1.6 | GA | 1470 | 1.6 | GA | 7.0 |
| b | 1800 | 1.6 | GA | 780 | 2.0 | GA | 7.0 |
| c | 1800 | 1.6 | Cold rolled | 780 | 2.0 | GA | 7.0 |
| d | 980 | 1.0 | GA | 780 | 2.4 | GA | 7.0 |

**[Table 2-1]**

| No. | Sheet set No. | D (mm) | TS (MPa) | Welding conditions | | | | | | | | | Remarks |
|---|---|---|---|---|---|---|---|---|---|---|---|---|---|
| | | | | Pressurizing force (kN) | Main energizing step | | Cooling step | Post-energizing step | | Holding step | Work disturbance in LME evaluation (state immediately before pressurization) | | |
| | | | | | Current value Im (kA) | Energization time (ms) | Cooling time Ct (ms) | Current value Ip (kA) | Energization time Pt (ms) | Holding time Ht (ms) | | | |
| 1 | a | 3.2 | 1470 | 4.0 | 7.3 | 300 | 160 | 6.0 | 300 | 80 | (a) | Contact angle: 5 degrees | Present invention example |
| 2 | a | 3.2 | 1470 | 4.0 | 7.3 | 300 | 160 | 6.0 | 300 | 360 | (a) | Contact angle: 7 degrees | Present invention example |
| 3 | a | 3.2 | 1470 | 4.0 | 7.3 | 300 | 160 | 6.0 | 300 | 360 | (d) | Gap between sheets: 1 mm | Present invention example |
| 4 | a | 3.2 | 1470 | 4.0 | 7.3 | 300 | 260 | 6.5 | 300 | 360 | (d) | Gap between sheets: 1 mm | Present invention example |
| 5 | a | 3.2 | 1470 | 4.0 | 7.3 | 300 | 800 | 6.5 | 300 | 360 | (d) | Gap between sheets: 1 mm | Present invention example |
| 6 | a | 3.2 | 1470 | 4.0 | 7.3 | 300 | 160 | 7.0 | 300 | 500 | (d) | Gap between sheets: 1 mm | Comparative example |
| 7 | a | 3.2 | 1470 | 4.0 | 7.3 | 300 | 160 | 6.0 | 900 | 80 | (a) | Contact angle: 7 degrees | Present invention example |
| 8 | a | 3.2 | 1470 | 4.0 | 7.3 | 300 | 120 | 6.0 | 300 | 80 | (a) | Contact angle: 5 degrees | Comparative example |
| 9 | a | 3.2 | 1470 | 4.0 | 7.3 | 300 | 160 | 6.0 | 300 | 400 | (a) | Contact angle: 5 degrees | Comparative example |
| 10 | b | 3.6 | 1800 | 4.0 | 7.0 | 400 | 160 | 5.5 | 350 | 200 | (a) | Contact angle: 5 degrees | Present invention example |
| 11 | b | 3.6 | 1800 | 4.0 | 7.0 | 400 | 160 | 5.5 | 350 | 200 | (c) | Gap between electrode and sheet: 1 mm | Present invention example |
| 12 | b | 3.6 | 1800 | 4.0 | 7.0 | 400 | 160 | 5.5 | 350 | 100 | (c) | Gap between electrode and sheet: 1 mm | Present invention example |
| 13 | b | 3.6 | 1800 | 4.0 | 7.0 | 400 | 300 | 6.5 | 800 | 160 | (c) | Gap between electrode and sheet: 1 mm | Present invention example |
| 14 | b | 3.6 | 1800 | 4.0 | 7.0 | 400 | 300 | 3.0 | 350 | 200 | (c) | Gap between electrode and sheet: 1 mm | Present invention example |
| 15 | b | 3.6 | 1800 | 4.0 | 7.0 | 400 | 300 | 8.0 | 350 | 100 | (c) | Gap between electrode and sheet: 1 mm | Present invention example |
| 16 | b | 3.6 | 1800 | 4.0 | 7.0 | 400 | 320 | 5.5 | 350 | 60 | (b) | Electrode misalignment amount: 1 mm | Present invention example |
| 17 | b | 3.6 | 1800 | 4.0 | 7.0 | 400 | 320 | 5.5 | 160 | 300 | (b) | Electrode misalignment amount: 1 mm | Present invention example |
| 18 | b | 3.6 | 1800 | 4.0 | 7.0 | 400 | 320 | 5.5 | 350 | 20 | (b) | Electrode misalignment amount: 1 mm | Comparative example |
| 19 | b | 3.6 | 1800 | 4.0 | 7.0 | 400 | 160 | 5.5 | 350 | 600 | (b) | Electrode misalignment amount: 1 mm | Comparative example |
| 20 | b | 3.6 | 1800 | 4.0 | 7.0 | 400 | 160 | 5.5 | 350 | 40 | (b) | Electrode misalignment amount: 1 mm | Comparative example |
| 21 | b | 3.6 | 1800 | 4.0 | 7.0 | 400 | 160 | 5.5 | 350 | 100 | (e) | Shortest distance to steel-sheet end surface: 5 mm | Present invention example |
| 22 | c | 3.6 | 1800 | 4.0 | 6.8 | 400 | 160 | 5.5 | 350 | 100 | (a), (c) | Contact angle: 3 degrees | Present invention example |
| | | | | | | | | | | | | Gap between electrode and sheet: 1 mm | |
| 23 | d | 3.4 | 980 | 4.0 | 7.3 | 300 | 250 | 6.0 | 300 | 360 | (a) | Contact angle: 7 degrees | Present invention example |
| 24 | d | 3.4 | 980 | 4.0 | 7.3 | 300 | 250 | 6.0 | 300 | 360 | - | None | Present invention example |

**[Table 2-2]**

| No. | 2×D× √TS-80 | Expression (1) or (2) | Lower limit value of expression (1) or (2) | Upper limit value of expression (1) or (2) | Lower limit value of expression (3) | Upper limit value of expression (3) | Lower limit value of expression (4) | Upper limit value of expression (4) | Cracking evaluation | CTS evaluation | Determination | Remarks |
|---|---|---|---|---|---|---|---|---|---|---|---|---|
| 1 | 165.4 | Expression (1) | 42.7 | 385.3 | 3.7 | 8.0 | 182.5 | 851.7 | A | A | OK | Present invention example |
| 2 | 165.4 | Expression (1) | 42.7 | 385.3 | 3.7 | 8.0 | 182.5 | 851.7 | A | A | OK | Present invention example |
| 3 | 165.4 | Expression (1) | 42.7 | 385.3 | 3.7 | 8.0 | 182.5 | 851.7 | A | A | OK | Present invention example |
| 4 | 165.4 | Expression (2) | 40.0 | 485.3 | 3.7 | 8.0 | 168.5 | 786.2 | A | A | OK | Present invention example |
| 5 | 165.4 | Expression (2) | 40.0 | 1025.3 | 3.7 | 8.0 | 168.5 | 786.2 | A | A | OK | Present invention example |
| 6 | 165.4 | Expression (1) | 42.7 | 385.3 | 3.7 | 8.0 | 156.4 | 730.0 | A | F | NG | Comparative example |
| 7 | 165.4 | Expression (1) | 42.7 | 385.3 | 3.7 | 8.0 | 182.5 | 851.7 | B | A | OK | Present invention example |
| 8 | 165.4 | Expression (1) | 62.7 | 345.3 | 3.7 | 8.0 | 182.5 | 851.7 | F | A | NG | Comparative example |
| 9 | 165.4 | Expression (1) | 42.7 | 385.3 | 3.7 | 8.0 | 182.5 | 851.7 | A | F | NG | Comparative example |
| 10 | 225.5 | Expression (1) | 72.7 | 389.1 | 3.5 | 7.7 | 190.9 | 890.9 | A | A | OK | Present invention example |
| 11 | 225.5 | Expression (1) | 72.7 | 389.1 | 3.5 | 7.7 | 190.9 | 890.9 | A | A | OK | Present invention example |
| 12 | 225.5 | Expression (1) | 72.7 | 389.1 | 3.5 | 7.7 | 190.9 | 890.9 | A | A | OK | Present invention example |
| 13 | 225.5 | Expression (2) | 40.0 | 529.1 | 3.5 | 7.7 | 161.5 | 753.8 | B | A | OK | Present invention example |
| 14 | 225.5 | Expression (2) | 40.0 | 529.1 | 3.5 | 7.7 | 350.0 | 1633.3 | A | B | OK | Present invention example |
| 15 | 225.5 | Expression (2) | 40.0 | 529.1 | 3.5 | 7.7 | 131.3 | 612.5 | B | A | OK | Present invention example |
| 16 | 225.5 | Expression (2) | 40.0 | 549.1 | 3.5 | 7.7 | 190.9 | 890.9 | A | A | OK | Present invention example |
| 17 | 225.5 | Expression (2) | 40.0 | 549.1 | 3.5 | 7.7 | 190.9 | 890.9 | A | B | OK | Present invention example |
| 18 | 225.5 | Expression (2) | 40.0 | 549.1 | 3.5 | 7.7 | 190.9 | 890.9 | F | A | NG | Comparative example |
| 19 | 225.5 | Expression (1) | 72.7 | 389.1 | 3.5 | 7.7 | 190.9 | 890.9 | A | F | NG | Comparative example |
| 20 | 225.5 | Expression (1) | 72.7 | 389.1 | 3.5 | 7.7 | 190.9 | 890.9 | F | A | NG | Comparative example |
| 21 | 225.5 | Expression (1) | 72.7 | 389.1 | 3.5 | 7.7 | 190.9 | 890.9 | A | A | OK | Present invention example |
| 22 | 225.5 | Expression (1) | 72.7 | 389.1 | 3.4 | 7.5 | 185.5 | 865.5 | A | A | OK | Present invention example |
| 23 | 132.9 | Expression (2) | 40.0 | 543.2 | 3.7 | 8.0 | 182.5 | 851.7 | A | A | OK | Present invention example |
| 24 | 132.9 | Expression (2) | 40.0 | 543.2 | 3.7 | 8.0 | 182.5 | 851.7 | A | A | OK | Present invention example |

As can be clearly understood from Table 2-2, the evaluation results of all present invention examples were "OK". That is, with the present invention examples, the occurrences of cracking during the welding were stably suppressed in the surface treated steel sheet while the welding joints for which the CTS was ensured were obtained.

### Reference Signs List

- 1: upper steel sheet
- 2: lower steel sheet
- 3: upper electrode
- 4: lower electrode
- 5: nugget

## Claims

1. A method for resistance spot welding,
wherein two or more steel sheets (1, 2) including at least one surface treated steel sheet having a metal coated layer are caused to overlap each other to form a sheet set, and the sheet set is clamped and pressurized by a pair of welding electrodes (3, 4) while being energized so as to be joined to each other,
wherein the method includes the steps of main energizing performed for forming a nugget (5),
cooling,
post-energizing, and
holding,
wherein the cooling, the post-energizing, and the holding are performed after the main energizing,
wherein cooling time Ct (ms) in the cooling is more than or equal to 140 ms, and
**characterized in that** holding time Ht (ms) in the holding satisfies expression (1) or expression (2) below: 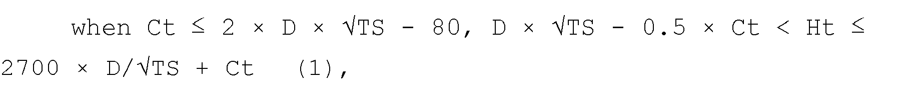 when Ct ≤ 2 × D × √TS - 80, D × √TS - 0.5 × Ct < Ht ≤ 2700 × D/√TS + Ct (1), $when Ct > 2 \times D \times √ TS - 80 , 40 < Ht \leq 2700 \times D / √ TS + Ct$ (2),
in expression (1) and expression (2), D is a total thickness (mm) of the sheet set, and TS is a tensile strength (MPa) of a steel sheet having a highest tensile strength in the sheet set.

2. The method for resistance spot welding according to Claim 1,
wherein, in the post-energizing step, a current value Ip (kA) and an energization time Pt (ms) satisfy expression (3) and expression (4) below: $0.5 \times Im \leq Ip \leq 1.1 \times Im$ (3), $150 \times Im / Ip \leq Pt \leq 700 \times Im / Ip$ (4),
in expression (3) and expression (4), Im represents a current value (kA) in the main energizing step.

3. The method for resistance spot welding according to Claim 1 or 2,
wherein one or two or more of states (a) to (e) below are satisfied immediately before pressurization with the welding electrodes (3, 4) is performed:
(a) a state in which the steel sheets (1, 2) overlapping each other and the welding electrodes (3, 4) form a contact angle of larger than or equal to 0.2 degrees;
(b) a state in which the pair of welding electrodes (3, 4) are misaligned from each other by larger than or equal to 0.1 mm;
(c) a state in which a gap of larger than or equal to 0.5 mm is formed between one of the welding electrodes (3, 4) and the steel sheets (1, 2) overlapping each other;
(d) a state in which a gap of larger than or equal to 0.5 mm is formed between at least a pair of steel sheets out of the steel sheets (1, 2) overlapping each other; and
(e) a state in which a shortest distance between a center of a weld point and steel-sheet end surfaces of the steel sheets (1, 2) overlapping each other is smaller than or equal to 10 mm.

4. The method for resistance spot welding according to Claim 1 or 2,
wherein at least one of the steel sheets (1, 2) overlapping each other has a tensile strength of higher than or equal to 980 MPa.

5. The method for resistance spot welding according to Claim 3,
wherein at least one of the steel sheets (1, 2) overlapping each other has a tensile strength of higher than or equal to 980 MPa.

## Patentansprüche

1. Widerstandspunktschweißverfahren,
wobei bewirkt wird, dass zwei oder mehr Stahlbleche (1, 2), die mindestens ein oberflächenbehandeltes Stahlblech mit einer metallbeschichteten Schicht beinhalten, einander überlappen, um einen Blechsatz auszubilden, und der Blechsatz während einer Energetisierung durch ein Paar von Schweißelektroden (3, 4) eingeklemmt und unter Druck gesetzt wird, um miteinander verbunden zu werden,
wobei das Verfahren die Schritte
Hauptenergetisierung, durchgeführt zum Ausbilden einer Schweißlinse (5),
Abkühlen,
Nachenergetisierung und
Halten beinhaltet,
wobei das Abkühlen, die Nachenergetisierung und das Halten nach der Hauptenergetisierung durchgeführt werden,
wobei die Abkühlzeit Ct (ms) beim Abkühlen mehr als oder gleich 140 ms beträgt, und
**dadurch gekennzeichnet, dass**
die Haltezeit Ht (ms) bei dem Halten den nachstehenden Ausdruck (1) oder Ausdruck (2) erfüllt: 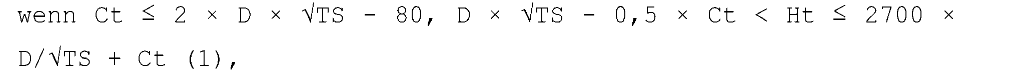 wenn Ct ≤ 2 × D × √TS - 80, D × √TS - 0,5 × Ct < Ht ≤ 2700 × D/√TS + Ct (1), $wenn Ct > 2 \times D \times √ TS - 80 , 40 < Ht \leq 2700 \times D / √ TS + Ct$ (2),
wobei in Ausdruck (1) und Ausdruck (2) D eine Gesamtdicke (mm) des Blechsatzes ist und TS eine Zugfestigkeit (MPa) eines Stahlblechs mit der höchsten Zugfestigkeit in dem Blechsatz ist.

2. Widerstandspunktschweißverfahren nach Anspruch 1,
wobei in dem Schritt der Nachenergetisierung ein Stromwert Ip (kA) und eine Energetisierungszeit Pt (ms) den nachstehenden Ausdruck (3) und Ausdruck (4) erfüllen: $0,5 \times Im \leq Ip \leq 1,1 \times Im$ (3), $150 \times Im / Ip \leq Pt \leq 700 \times Im / Ip$ (4),
wobei in Ausdruck (3) und Ausdruck (4) Im einen Stromwert (kA) in dem Hauptenergetisierungsschritt darstellt.

3. Widerstandspunktschweißverfahren nach Anspruch 1 oder 2,
wobei einer oder zwei oder mehrere der nachstehenden Zustände (a) bis (e) unmittelbar vor Durchführen der Druckbeaufschlagung mit den Schweißelektroden (3, 4) erfüllt sind:
(a) ein Zustand, in dem die Stahlbleche (1, 2) einander überlappen und die Schweißelektroden (3, 4) einen Kontaktwinkel von größer als oder gleich 0,2 Grad ausbilden;
(b) ein Zustand, in dem das Paar von Schweißelektroden (3, 4) um größer als oder gleich 0,1 mm nichtfluchtend sind;
(c) ein Zustand, in dem zwischen einer der Schweißelektroden (3, 4) und den einander überlappenden Stahlblechen (1, 2) ein Spalt von größer als oder gleich 0,5 mm ausgebildet ist;
(d) ein Zustand, in dem zwischen mindestens einem Paar von Stahlblechen aus den einander überlappenden Stahlblechen (1, 2) ein Spalt von größer als oder gleich 0,5 mm ausgebildet ist; und
(e) ein Zustand, in dem der kürzeste Abstand zwischen einem Mittelpunkt eines Schweißpunktes und Stahlblech-Endflächen der einander überlappenden Stahlbleche (1, 2) kleiner als oder gleich 10 mm ist.

4. Widerstandspunktschweißverfahren nach Anspruch 1 oder 2,
wobei mindestens eines der einander überlappenden Stahlbleche (1, 2) eine Zugfestigkeit von höher als oder gleich 980 MPa aufweist.

5. Widerstandspunktschweißverfahren nach Anspruch 3,
wobei mindestens eines der einander überlappenden Stahlbleche (1, 2) eine Zugfestigkeit von höher als oder gleich 980 MPa aufweist.

## Revendications

1. Procédé de soudage par points par résistance,
dans lequel deux tôles d'acier (1, 2) ou plus, comportant au moins une tôle d'acier traitée en surface ayant une couche revêtue de métal, sont amenées à se chevaucher pour former un ensemble de tôles, et l'ensemble de tôles est serré et mis sous pression par une paire d'électrodes de soudage (3, 4) tout en étant alimenté en énergie, afin d'être jointes les unes aux autres,
dans lequel le procédé comporte les étapes de
alimentation en énergie principale réalisée pour former une pépite (5),
refroidissement,
post-alimentation en énergie, et
maintien,
dans lequel le refroidissement, la post-alimentation en énergie et le maintien sont réalisés après l'alimentation en énergie principale,
dans lequel le temps de refroidissement Ct (ms) dans le refroidissement est supérieur ou égal à 140 ms, et **caractérisé en ce que**
le temps de maintien Ht (ms) dans le maintien satisfait à l'expression (1) ou à l'expression (2) ci-dessous : 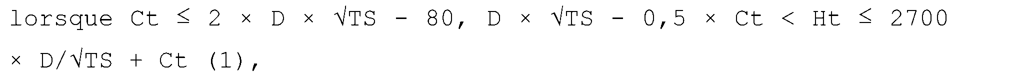 lorsque Ct ≤ 2 × D × √TS - 80, D × √TS - 0,5 × Ct < Ht ≤ 2700 × D/√TS + Ct (1), $lorsque Ct > 2 \times D \times √ TS - 80 , 40 < Ht \leq 2700 \times D / √ TS + Ct$ (2),
dans l'expression (1) et l'expression (2), D est une épaisseur totale (mm) de l'ensemble de tôles, et TS est une résistance à la traction (MPa) d'une tôle d'acier ayant une résistance à la traction la plus élevée dans l'ensemble de tôles.

2. Procédé de soudage par points par résistance selon la revendication 1,
dans lequel, dans l'étape de post-alimentation en énergie, une valeur de courant Ip (kA) et un temps d'alimentation en énergie Pt (ms) satisfont aux expressions (3) et (4) ci-dessous : $0,5 \times Im \leq Ip \leq 1,1 \times Im$ (3), $150 \times Im / Ip \leq Pt \leq 700 \times Im / Ip$ (4),
dans l'expression (3) et l'expression (4), Im représente une valeur de courant (kA) dans l'étape d'alimentation en énergie principale.

3. Procédé de soudage par points par résistance selon la revendication 1 ou 2,
dans lequel un ou deux ou plus des états (a) à (e) ci-dessous sont satisfaits immédiatement avant la réalisation de la mise sous pression avec les électrodes de soudage (3, 4) :
(a) un état dans lequel les tôles d'acier (1, 2) se chevauchant et les électrodes de soudage (3, 4) forment un angle de contact supérieur ou égal à 0,2 degré ;
(b) un état dans lequel la paire d'électrodes de soudage (3, 4) sont désalignées l'une par rapport à l'autre d'une valeur supérieure ou égale à 0,1 mm ;
(c) un état dans lequel un écart supérieur ou égal à 0,5 mm est formé entre l'une des électrodes de soudage (3, 4) et les tôles d'acier (1, 2) se chevauchant ;
(d) un état dans lequel un espace supérieur ou égal à 0,5 mm se forme entre au moins une paire de tôles d'acier parmi les tôles d'acier (1, 2) se chevauchant ; et
(e) un état dans lequel une distance la plus courte entre un centre d'un point de soudage et les surfaces d'extrémité de tôle d'acier des tôles d'acier (1, 2) se chevauchant est inférieure ou égale à 10 mm.

4. Procédé de soudage par points par résistance selon la revendication 1 ou 2,
dans lequel au moins l'une des tôles d'acier (1, 2) se chevauchant a une résistance à la traction supérieure ou égale à 980 MPa.

5. Procédé de soudage par points par résistance selon la revendication 3,
dans lequel au moins l'une des tôles d'acier (1, 2) se chevauchant a une résistance à la traction supérieure ou égale à 980 MPa.
